# FASCICULE DE BREVET EUROPEEN

(11) **EP 3 483 396 B1**
(45) Date de publication et mention de la délivrance du brevet: **12.02.2020**
(21) Numéro de dépôt: 18205071.6
(22) Date de dépôt: 08.11.2018
(51) Int. Cl.: F02K 3/04, F02C 7/24, F02K 1/34, F01D 9/04, F01D 9/02

(54) **ANNEAU D'AUBES FIXES D'UN TURBORÉACTEUR COMPRENANT UNE STRUCTURE DE TRAITEMENT ACOUSTIQUE**
LEITSCHAUFELRING EINES TURBOREAKTORS, DER EINE SCHALLDÄMMSTRUKTUR UMFASST
STATOR BLADE RING OF A TURBOJET ENGINE COMPRISING AN ACOUSTIC ISOLATING STRUCTURE

(30) Priorité: 10.11.2017 FR 1760612
(43) Date de publication de la demande: 15.05.2019
(73) Titulaire: SAFRAN AIRCRAFT ENGINES, 75015 Paris (FR)
(72) Inventeur: ZACCARDI, Cédric, 77550 MOISSY-CRAMAYEL (FR); MARLIN, François Marie Paul, 77550 MOISSY-CRAMAYEL (FR); PAPIN, Thierry Georges Paul, 77550 MOISSY-CRAMAYEL (FR); PERDRIGEON, Christophe Marcel Lucien, 77550 MOISSY-CRAMAYEL (FR); MARDJONO, Jacky Novi, 77550 MOISSY-CRAMAYEL (FR)
(74) Mandataire: Cabinet Beau de Loménie

(56) Documents cités:
- EP-A1- 0 433 111
- WO-A1-2011/034469
- CA-A1- 2 697 292
- US-A1- 2003 031 556

## Description

### Arrière-plan de l'invention

La présente invention se rapporte au domaine général du traitement acoustique dit « passif », notamment, mais non exclusivement, dans le domaine d'application des turbomachines aéronautiques.

L'invention concerne plus particulièrement un anneau d'aubes fixes d'une turbomachine d'un aéronef, et plus particulièrement le traitement acoustique de l'anneau.

L'utilisation de panneaux de traitement acoustique passif est fréquente dans le domaine de l'aéronautique pour réduire les émissions sonores émises par les turbomachines. Par exemple, dans le cas d'un turboréacteur du type double corps double flux, de tels panneaux peuvent être disposés sur la face interne de la nacelle du turboréacteur, mais également sur les faces interne et externe de son capot primaire.

Un panneau de traitement acoustique passif est généralement formé d'une structure formant des cavités résonnantes recouverte d'une couche poreuse mince (également appelée peau perforée) faisant office de paroi de veine et fermée à l'autre extrémité par une couche réfléchissante d'un point de vue acoustique (également appelée peau pleine).

Dans le cadre de spécifications générales acoustiques de plus en plus contraignante quant à la réduction du niveau acoustique, et notamment dans le cadre de nacelles fines et courtes où les surfaces disponibles pour un éventuel traitement acoustique sont de plus en plus faibles, il est difficile de répondre aux spécifications générales classiquement. Il y a en effet moins de place pour installer les équipements, en particulier les panneaux acoustiques servant à atténuer le bruit de la soufflante. Ainsi, le volume et l'intégration des équipements deviennent des problématiques majeures, en particulier l'installation de panneaux acoustiques dans la veine secondaire du moteur.

Par ailleurs, dans un anneau d'aubes fixes, noté aussi OGV en anglais pour « outlet guide vane », la veine aérodynamique est reconstituée par des pièces annexes comme des plateformes montées entre les aubes directrices de sortie en étant interposées en proximité de pied et en proximité de tête de ces aubes. Généralement, des panneaux de traitement acoustique sont utilisés juste en amont et en aval des anneaux d'aubes directrices de sortie. L'anneau en lui-même est généralement dépourvu de traitement acoustique ce qui réduit la surface de traitement acoustique et ainsi l'efficacité du traitement acoustique.

Ces plateformes rigides dépourvues de traitement acoustique, et formant donc une zone de fuite acoustique, peuvent aussi être excitées par le flux secondaire, ce qui fait partie des contraintes de dimensionnement.

Les plateformes formant les viroles interne et externe de l'anneau et reconstituant la veine aérodynamique de l'anneau d'aubes directrices de sortie comprennent généralement un nervurage important pour garantir la tenue de la plateforme et réduire le risque de dégradation de l'intégrité de la structure de l'anneau.

Il est connu des anneaux d'aubes fixes de turboréacteur comprenant des panneaux d'atténuation sonore comportant des cavités résonnantes, les panneaux étant insérés dans des épargnes réalisées sur des portions de plateformes et des portions d'aubes. WO 2011/034469 et US 2003/031556 divulguent des exemples des panneaux d'atténuation sonore.

Cependant, ces panneaux ne permettent de couvrir qu'une portion de la surface de la virole, pouvant être qualifiée de gaine annulaire, formée par les plateformes des aubes fixes. En effet, pour conserver l'intégrité de la structure de l'anneau, une épargne ne peut être réalisée que dans une portion de la plateforme.

### Objet et résumé de l'invention

L'invention vise à proposer un anneau d'aubes fixes d'une turbomachine maximisant pour au moins une des viroles interne ou externe le traitement acoustiquement pour réduire la propagation d'ondes sonores en dehors de la turbomachine.

Un objet de l'invention propose un anneau d'aubes fixes d'une turbomachine d'un aéronef, l'anneau présentant une direction axiale et une direction radiale et comprenant une première gaine annulaire présentant une première surface interne et une seconde gaine annulaire présentant une seconde surface interne, en regard de la première surface interne de la première gaine annulaire. Les première et seconde gaines sont coaxiales et définissent entre elles une veine d'écoulement de flux gazeux. L'anneau comprend en outre des panneaux de traitement acoustique comportant des cavités résonnantes. Des aubes s'étendent dans la direction radiale entre la première gaine et la seconde gaine. Ces aubes comportent au moins deux pattes d'accrochage à chaque extrémité radiale.

Selon une caractéristique générale de l'invention, d'une part, les aubes comportent chacune une pale radiale et lesdites pattes d'accrochage à chaque extrémité radiale de la pale fixées à la première ou seconde gaine, et, d'autre part, la surface interne d'au moins l'une des première et seconde gaines annulaires et les pattes d'accrochage correspondantes sont recouvertes par des panneaux de traitement acoustique disposés entre les pales.

Les panneaux de traitement acoustique de l'anneau selon l'invention permettent ainsi de regrouper deux fonctions à la fois : une fonction de traitement acoustique des ondes sonores issues de la veine d'écoulement et une fonction aérodynamique relative à la formation de plateformes dans des caissons inter aubes permettant de former une gaine annulaire. L'invention permet ainsi de fournir des panneaux de traitement acoustique remplissant ces deux fonctions tout en améliorant la tenue mécanique de la gaine annulaire et en minimisant sa masse. Les caissons inter-aubes à fonction acoustique et aérodynamique permettent aussi de gérer correctement les contraintes de tenue mécaniques, les problématiques d'intégration architecturale et les contraintes de montage et fixation.

Les cavités résonnantes des panneaux de traitement acoustique permettent notamment de maximiser l'atténuation sur la plage fréquentielle ciblée, comme par exemple une plage s'étendant entre 400 Hz et 4 kHz par exemple pour une turbomachine à soufflante carénée à très haut taux de dilution, parfois qualifiée par l'acronyme « UHBR » pour correspondre à l'expression anglophone « Ultra High Bypass Ratio ». La soufflante d'une telle machine pose des contraintes importantes en acoustique.

L'invention permet d'étendre la surface de traitement acoustique entre les aubes de l'anneau en utilisant tout le volume hors veine d'écoulement disponible entre les aubes pour réaliser le traitement acoustique, en augmentant la tenue et le maintien des plateformes et en diminuant la complexité des plateformes connues, la complexité étant généralement dues à un nombre important de nervures important.

L'anneau selon l'invention permet de réaliser un gain de 35% de surface de traitement acoustique tout en reconstituant la veine aérodynamique entre les aubes. L'anneau permet en effet de traiter acoustiquement environ 60% de la surface de la plateforme en contact avec le flux secondaire. Le traitement acoustique des plateformes augmente de 20 à 40 % la surface traitée acoustiquement en aval de la soufflante par rapport aux solutions connus dans l'état de la technique.

Les panneaux de traitement acoustique formant les plateformes dans des caissons inter-aube combinent les fonctions aérodynamique et acoustique sur un maximum de volume entre les pattes d'accrochage des aubes.

En outre, selon une caractéristique générale de l'invention, les panneaux de traitement acoustique comprennent chacun une plateforme partiellement annulaire et un capot formant un boîtier fermé avec la plateforme, la plateforme présentant une première face en regard de la veine d'écoulement et une seconde face opposée à la première face et depuis laquelle s'étend le capot en saillie dans la direction radiale, le boîtier comprenant un logement défini par l'espace intérieur s'étendant entre la seconde face de la plateforme et le capot et dans lequel sont disposées lesdites cavités résonnantes.

Le boîtier fermé par son capot permet de maîtriser le comportement du traitement acoustique par rapport à un caisson ouvert à un extrémité des cavités résonnantes. Les effets du traitement acoustique d'une solution avec un caisson ouvert à une extrémité des cavités résonnantes sont difficiles à pronostiquer précisément, contrairement à un boîtier fermé. Ce manque de précision est dû à un manque de définition fiable de cavité acoustique compte tenu des jeux qui résultent au regard des carters sur lesquelles les plateformes sont fixées entre les aubes.

Selon un premier aspect de l'anneau d'aubes fixes, la plateforme de chaque panneau de traitement acoustique peut comprendre des orifices traversant permettant à la veine d'écoulement de communiquer avec les cavités résonnantes du panneau de traitement acoustique.

Les orifices dans la plateforme, également considérées comme des perforations dans une peau, permettent grandement de réaliser la fonction acoustique du panneau de traitement acoustique. Les ondes sonores issues de la veine d'écoulement peuvent être transmises aux cavités résonnantes des panneaux de traitement acoustique via les orifices.

Selon un deuxième aspect de l'anneau d'aubes fixes, la plateforme de chaque panneau de traitement acoustique présente un taux de perforation compris entre 5 à 12% de la surface couverte par la plateforme.

Le taux de perforation compris entre 5 et 12% permet d'obtenir de bonnes performances acoustiques.

En recouvrant la première ou seconde gaine annulaire, les panneaux de traitement acoustique forment une gaine annulaire de traitement acoustique qui présente alors une structure de type sandwich semblable à celle des panneaux de traitement acoustique. La gaine annulaire de traitement acoustique comprend ainsi une première couche formée par la plateforme assimilable à une première paroi, une seconde couche formée par une structure présentant des cavités résonnantes et une troisième couche formée par le capot assimilable à une seconde paroi, la seconde couche étant comprise entre les première et troisième couches. Cette structure de type sandwich assure un ratio rigidité sur masse optimum permettant la tenue du panneau, et donc de la gaine annulaire, sous sollicitations mécaniques et aérodynamiques, c'est-à-dire une bonne tenue vibratoire et une bonne tenue par rapport à la différence de pression exercée sur le panneau de traitement acoustique.

Selon un troisième aspect de l'anneau d'aubes fixes, pour chaque panneau de traitement acoustique, la plateforme s'étend sur une portion annulaire supérieure à la portion annulaire décrite par le capot, le boîtier formé par l'assemblage du capot avec la plateforme définissant sur sa périphérie extérieure une portée permettant de recevoir un joint d'étanchéité.

Des éléments de fixation peuvent le cas échéant être prévus pour raccorder le panneau avec les pattes d'accrochage d'une aube ou avec un autre panneau de traitement acoustique. Par exemple, il peut s'agir de languettes de fixation amont et/ou aval mises en coopération par engagement avec des aménagements correspondant en carter de l'anneau d'aubes fixes.

Le détourage du boîtier permet de maximiser la surface de traitement acoustique tout en intégrant, d'une part, l'emplacement pour loger un joint d'étanchéité destiné à coopérer avec les portions du carter en amont et en aval de l'anneau par rapport au sens du flux d'écoulement gazeux dans la veine d'écoulement, et, d'autre part, l'emplacement des orifices, ou des vis, ou des inserts permettant la fixation des panneaux avec la aube, ou bien encore permettant la fixation de panneau entre eux.

Selon un quatrième aspect de l'anneau d'aubes fixes, le panneau de traitement acoustique peut comprendre au moins un amortisseur élastique monté sur la seconde face de la plateforme. Par exemple, l'amortisseur élastique traverse le capot dans la direction radiale.

Les amortisseurs élastiques, ou « bumpers » en anglais, permettent d'atténuer les vibrations des panneaux de traitement acoustique formant la virole.

Selon un cinquième aspect de l'anneau d'aubes fixes, le capot peut comprendre une couche acoustiquement réfléchissante.

Selon un sixième aspect de l'anneau d'aubes fixes, le boîtier peut comprendre des cloisons disposées dans le logement et s'étendant dans la direction radiale entre la face externe de la plateforme et le capot.

Les cloisons permettent de rigidifier le panneau de traitement acoustique et ainsi d'améliorer la résistance structurelle des panneaux de traitement sous les sollicitations aérodynamiques et/ou vibratoires. Les cloisons peuvent également être utilisées pour former directement les cavités résonnantes à l'intérieur du boîtier des panneaux de traitement acoustique.

L'accord en fréquence, c'est-à-dire l'optimisation qui permet d'atteindre une dissipation maximale aux fréquences à atténuer se fait majoritairement via le volume des cavité résonnantes. Les caractéristiques géométriques des cavités résonnantes, et donc des cloisons, sont définies en fonction des performances acoustiques ciblées.

Dans un mode de réalisation du sixième aspect, les cloisons peuvent être conformées pour former des cavités radialement courbes.

Les cavités courbes permettent d'améliorer l'atténuation en basses fréquences dans des volumes restreints, notamment si la hauteur du logement, selon la direction radiale, est limitée.

Selon un septième aspect de l'anneau d'aubes fixes, chaque panneau de traitement peut comprendre un matériau poreux disposé dans le logement du boîtier et définissant lesdites cavités résonnantes.

Les matériaux poreux peuvent être des mousses ou bien des matériaux viscoélastiques.

Dans une variante, chaque panneau de traitement acoustique peut comprendre une structure en nid d'abeille montée dans le logement du boîtier et formant des alvéoles définissant lesdites cavités résonnantes.

La structure en nid d'abeille présente l'avantage de former à la fois les cavités résonnantes et les cloisons ou nervures de rigidification du panneau de traitement acoustique.

Dans un autre mode de réalisation, chaque panneau de traitement acoustique peut en outre comprendre des moyens de traitement acoustique actif, tels qu'un moyen piézo-électrique, disposés à l'intérieur des cavités résonnantes.

Selon un huitième aspect de l'anneau d'aubes fixes, la plateforme et le capot de chaque panneau de traitement acoustique sont en matériau composite de carbone ou en matériau composite de verre.

La réalisation de la plateforme et du capot en matériau composite de carbone ou de verre permet d'assurer une rigidité supplémentaire au panneau de traitement acoustique.

Selon un neuvième aspect de l'anneau d'aubes fixes, chaque panneau de traitement acoustique comprend des orifices de fixation radiale du panneau à la première ou seconde gaine annulaire, chaque orifice de fixation radiale traversant le boîtier selon la direction radiale depuis la plateforme jusqu'au capot, le boîtier comprenant en outre une zone renforcée dépourvue de cavité résonnantes autour de chaque orifice de fixation radiale.

Les zones renforcées, conservées libre de cavités résonnantes autour des fixations du panneau de traitement acoustique sur la première ou seconde gaine annulaire, permettent d'intégrer des inserts métalliques autour des fixations et de polymériser l'espace restant entre l'insert et les cavités résonnantes. Cela permet ainsi de réaliser une transition entre la fixation et les cavités résonnantes. Sans cette transition, la tenue de la plateforme serait de moins bonne qualité et la plateforme pourrait s'arracher.

Un autre objet de l'invention propose une turbomachine comprenant un anneau d'aubes fixes tel que défini ci-dessus.

Encore un autre objet de l'invention propose un aéronef comprenant une turbomachine telle que définie ci-dessus.

### Brève description des dessins.

L'invention sera mieux comprise à la lecture faite ci-après, à titre indicatif mais non limitatif, en référence aux dessins annexés sur lesquels :
- la figure 1 est une vue schématique en perspective d'un anneau d'aubes fixes selon un mode de réalisation de l'invention ;
- la figure 2 est un zoom d'une portion de l'anneau de la figure 1 :
- les figures 3, 4 et 5 présentent respectivement une vue schématique en perspective, une vue schématique en perspective tronquée, et une vue schématique de dessus d'une aube et d'un panneau de traitement acoustique de l'anneau de la figure 1 ;
- la figure 6 présente une vue selon un premier plan de coupe d'un panneau de traitement acoustique de la figure 5 ;
- la figure 7 présente une vue selon un second plan de coupe d'un panneau de traitement acoustique de la figure 5.

### Description détaillée de modes de réalisation

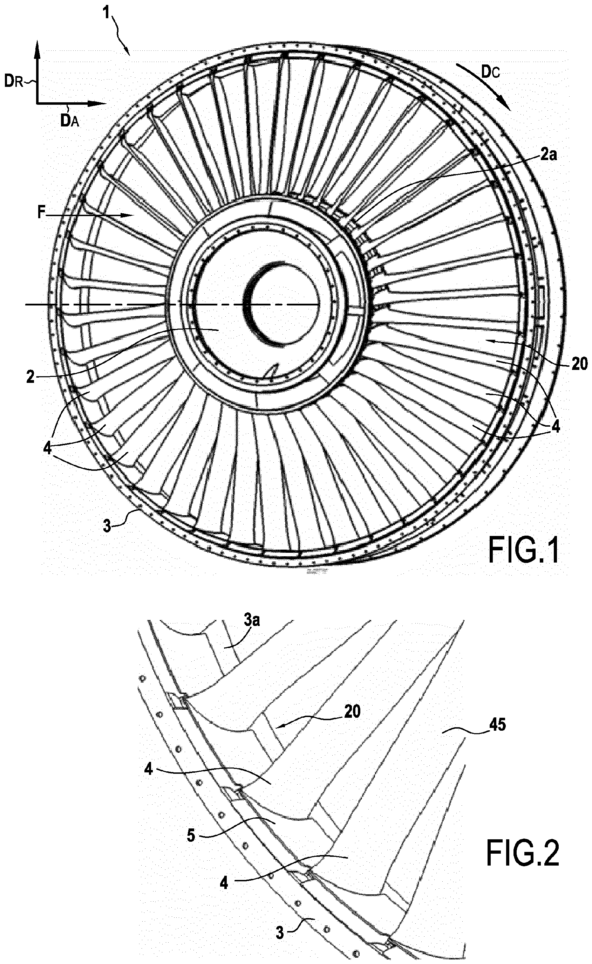

La figure 1 présente une vue schématique en perspective d'un anneau d'aubes fixes d'une turbomachine d'un aéronef selon un mode de réalisation de l'invention, et la figure 2 présente un zoom d'une portion de la figure 1.

L'anneau 1 illustré sur les figures 1 et 2 est un anneau d'aubes directrices de sortie. Il présente une direction axiale D_{A}, une direction radiale D_{R} et une direction circonférentielle D_{C}. L'anneau 1 comprend une virole interne 2, une virole externe 3 et des aubes 4 directrices fixes s'étendant chacune selon la direction radiale D_{R}.

Dans ce mode de réalisation, la virole externe 3 comprend un carter annulaire métallique présentant une surface interne 3a sur laquelle est assemblée une succession de panneaux 5 partiellement annulaire. Les panneaux 5 sont des caissons inter-aube constituant des panneaux de traitement acoustique comportant une structure de traitement acoustique formant des cavités résonnantes.

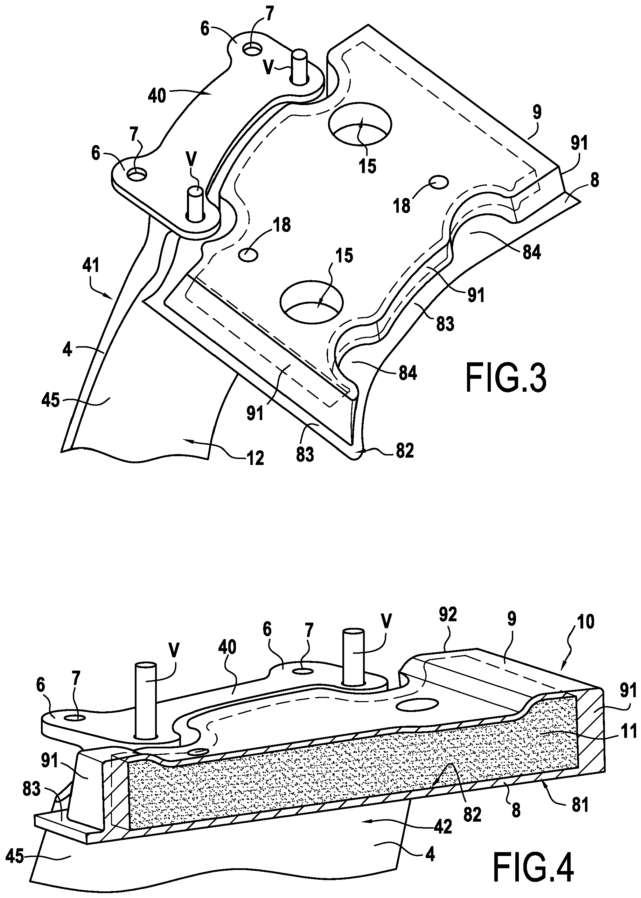

Comme cela est illustré sur les figures 3, 4 et 5 qui présentent respectivement une vue schématique en perspective, une vue schématique en perspective tronquée, et une vue schématique de dessus d'une aube 4 et d'un panneau 5 de traitement acoustique de l'anneau 1 des figures 1 et 2, chaque aube 4 comprend une pale 45 radiale et, à une extrémité radiale externe 40 de la pale 45 coopérant avec les panneaux 5 pour former la virole externe 3, quatre pattes de fixation 6 s'étendant dans la direction circonférentielle D_{C} de l'anneau 1. Deux pattes d'accrochage 6 s'étendent d'un premier côté 41 de la pale 45 de l'aube 4 en saillie depuis la pale 45, et deux pattes d'accrochage 6 s'étendent d'un second côté 42 de la pale 45 de l'aube 4, opposé au premier côté 41, en saillie depuis la pale 45. Les pattes d'accrochage 6 sont pourvues d'un orifice 7 permettant l'insertion d'une vis V pour solidariser, à l'aide d'un boulon coopérant avec la vis V, une aube 4 à la virole externe 3. Dans un autre mode de réalisation, les vis V et les orifices 7 peuvent permettre de solidariser ensemble un panneau 5 et une aube 4 avec la virole externe 3.

Comme cela est illustré sur les figures 3 à 5, les panneaux 5 comprennent une plateforme 8 formant une paroi partiellement annulaire permettant de reconstituer une paroi annulaire lorsque la virole externe 3 est recouverte par plusieurs panneaux 5 assemblés ensemble, et ainsi de former avec la virole interne 2, ou les panneaux 5 recouvrant la virole interne 2, une veine d'écoulement 20 d'un flux gazeux F illustrée sur la figure 1. La plateforme 8 présente une face interne 81 en regard de la veine d'écoulement 20 et de la virole interne 2 et une face externe 82 radialement opposée à la face interne 81 et en regard d'une structure annulaire de support d'anneau, non représentée, disposée autour de l'anneau 1.

Dans une variante, l'anneau peut ne pas comprendre de viroles internes et externes 2 et 3, les viroles, ou gaines annulaires, étant formées par l'assemblage des panneaux 5 avec les pattes d'accrochage 6 des aubes 4 en anneau.

Les panneaux 5 comprennent en outre chacun un capot 9 s'étendant en saillie depuis la face externe 82 de la plateforme 8. Le capot 9 et la plateforme 8 forme ensemble un boîtier 10. Le capot 9 comprend quatre parois radiales 91 s'étendant en saille selon la direction radiale D_{R} depuis la face externe 82 de la plateforme 8 et une paroi annulaire 92 s'étendant de manière sensiblement parallèle à la plateforme 8 depuis une première extrémité 911 des parois radiales 91 opposée à une seconde extrémité 912 des parois radiales 91 solidaires de la face externe 82 de la plateforme 8. La paroi annulaire 92 constitue une paroi de fond de boîtier de panneau 5.

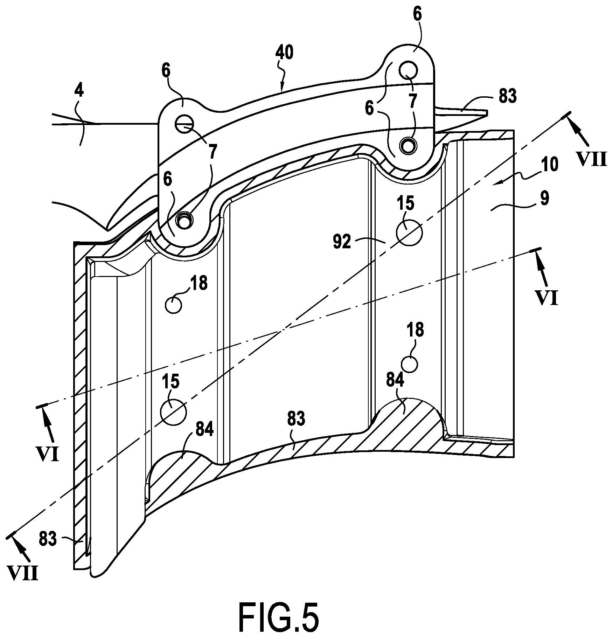

Comme cela est illustré notamment sur la figure 5, le boîtier 10 formé par le capot 9 et la plateforme 8 décrit un périmètre inférieur au périmètre de la plateforme 8. Autrement dit, le périmètre définit sur la face externe 82 de la plateforme 8 par les parois radiales 91 du capot 9 est inférieur au périmètre de la plateforme 8. L'espace libre s'étendant entre les parois radiales 91 et le périmètre de la plateforme 8 forme une portée 83 pour un joint d'étanchéité. Le joint d'étanchéité permet d'assurer l'étanchéité de la virole externe 3 entre les éléments en amont et en aval de l'anneau par rapport au sens d'écoulement du flux gazeux F indiqué sur la figure 1 par une flèche F orienté selon la direction axiale D_{A} de l'anneau 1. Le joint d'étanchéité permet également d'assurer l'étanchéité entre les panneaux 5 et les extrémités radiales 40 des aubes 4 auxquelles elles sont fixées.

Sur les côtés de la plateforme 8 des panneaux 5 destinés à être en contact avec les extrémités radiales 40 des aubes 4 via les pattes d'accrochage 6, la face externe 82 de la plateforme 8 comprend en outre deux épargnes 84 conformées pour recevoir les pattes d'accrochage 6 et permettre la fixation des aubes 4 aux panneaux 5. Les parois radiales 91 adjacentes aux épargnes 84 contournent les épargnes 84 pour permettre l'accouplement des aubes 4 aux panneaux 5 tout en formant un boîtier 10 couvrant la plus grande surface possible de la plateforme 8.

Le boîtier 10 forme un logement 11 s'étendant entre la paroi annulaire 92 du capot 9 et la face externe 82 de la plateforme 8 selon la direction radiale D_{R} et s'étendant entre les parois radiales 91 dans un plan orthogonale à la direction radiale D_{R}.

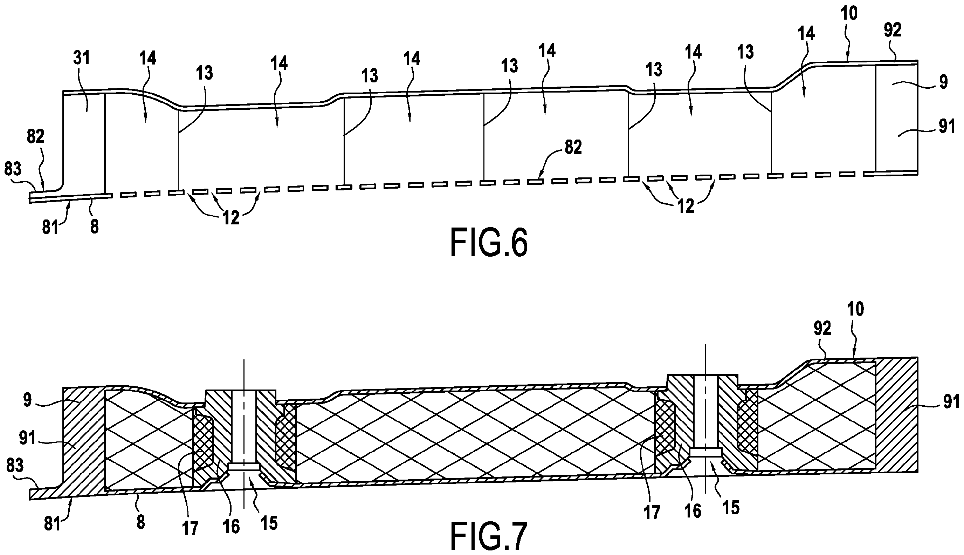

Sur la figure 6 est présentée une vue d'un panneau de traitement acoustique 5 selon un premier plan de coupe VI-VI de la figure 5.

Comme illustré sur la figure 6, la plateforme 8 est perforée de part en part par des orifices traversant 12 permettant de mettre en communication la veine d'écoulement 20 et le logement 11 à l'intérieur du boîtier 10. La plateforme 8 forme ainsi une peau acoustiquement poreuse. Le taux de perforation de la plateforme 8 est compris entre 5% et 12% et de préférence de 10% pour offrir de bonnes performances de réduction sonore. Par taux de perforation, on entend le rapport entre la surface couverte par les orifices et la surface totale de la plateforme 8.

Le boîtier 10 comprend en outre des cloisons 13 s'étendant dans la direction radiale D_{R} entre la face externe 82 de la plateforme 8 et la paroi annulaire 92 du capot 9. Les cloisons 13 permettent de rigidifier le boîtier 10 et donc le panneau de traitement acoustique 5 pour assurer une meilleure tenue mécanique de la virole externe 3. Les cloisons 13 permettent également de former des cavités résonnantes 14 au sein du logement 11 formé dans le boîtier 10 qui permettent de traiter les ondes sonores transmises via les orifices 12 de la veine d'écoulement 20 vers les cavités résonnantes 14 à l'intérieur du boîtier 10.

Les cloisons 13 peuvent être formées par les cloisons d'alvéoles d'une structure en nid d'abeilles. Dans une variante, les cloisons peuvent ne servir que pour rigidifier le panneau 5 de traitement acoustique, les cavités résonnantes étant formées à l'aide d'un matériau poreux, tel qu'une mousse ou un matériau viscoélastique, injecté dans le logement 11 du boîtier 10.

Sur la figure 7 est présentée une vue d'un panneau de traitement acoustique 5 selon un second plan de coupe VII-VII de la figure 5.

Comme cela est illustré par exemple sur les figures 5 et 7, les panneaux de traitement acoustique 5 comprennent deux orifices 15 de fixation du panneau 5 de traitement acoustique à une structure de support d'anneau non représentée. Les orifices 15 de fixation du panneau à la structure de support d'anneau, notés par la suite orifices de fixation radiale, traversent le boîtier 10 de part en part, c'est-à-dire qu'ils traversent la plateforme 8 et le capot 9. Les orifices 15 de fixation radiale présentent dans le logement 11 un diamètre au diamètre de la vis destinée à traverser le boîtier pour fixer le panneau à la structure de support d'anneau. Le diamètre est supérieur car, le boîtier comprend en outre dans le logement 11 pour chaque orifice 15 de fixation radiale un insert métallique 16 annulaire coaxial avec l'orifice 15 de fixation radiale et une zone annulaire renforcée 17 formé par l'espace tubulaire s'étendant entre l'insert métallique annulaire 16 et les cavités résonnantes 14 adjacentes du boîtier 10. Les zones renforcées 17, conservées libre de cavités résonnantes 14 autour des orifices 15 de fixation radiale permettent de polymériser l'espace restant entre l'insert 16 et les cavités résonnantes 14 ce qui permet de réaliser une transition entre la fixation et les cavités résonnantes.

En outre, comme cela est illustré sur les figures 3 et 5, les panneaux 5 de traitement acoustique comprennent chacun deux amortisseurs élastiques 18 montés sur la face externe 82 de la plateforme 8 et traversant la paroi annulaire 92 du capot 9 dans la direction radiale D_{R}. Les amortisseurs élastiques 18, ou « bumpers » en anglais, permettent d'atténuer les vibrations des panneaux de traitement acoustique formant la virole.

L'anneau d'aubes fixes selon l'invention permet de maximiser pour au moins une des viroles, qualifiées de gaines annulaires interne ou externe, le traitement acoustiquement pour réduire la propagation d'ondes sonores en dehors de la turbomachine.

## Revendications

1. Anneau (1) d'aubes fixes d'une turbomachine d'un aéronef, l'anneau (1) présentant une direction axiale (D_{A}) et une direction radiale (D_{R}) et comprenant une première gaine annulaire (2) présentant une première surface interne (2a) et une seconde gaine annulaire (3) présentant une seconde surface interne (3a) en regard de la première surface interne (2a) de la première gaine annulaire (2), les première et seconde gaines (2, 3) étant coaxiales et définissant entre elles une veine (20) d'écoulement d'un flux gazeux (F), et l'anneau (1) comprenant en outre des panneaux (5) de traitement acoustique partiellement annulaires comportant des cavités résonnantes (14) et des aubes (4) s'étendant dans la direction radiale (D_{R}) entre la première gaine (2) et la seconde gaine (3),
caractérisé ce que :
- d'une part, les aubes (4) comportent chacune une pale radiale (45) et au moins deux pattes d'accrochage (6) à chaque extrémité radiale (40) de la pale (45) fixées à la première ou seconde gaine (2, 3), et
- d'autre part, la surface interne (2a, 3a) d'au moins l'une des première et seconde gaines annulaires (2, 3) et les pattes d'accrochage (6) correspondantes sont recouvertes par des panneaux (5) de traitement acoustique disposés entre les pales (45), et
- les panneaux (5) de traitement acoustique comprennent chacun une plateforme (8) partiellement annulaire et un capot (9) formant un boîtier fermé (10) avec la plateforme (8), la plateforme (8) présentant une première face (81) en regard de la veine d'écoulement (20) et une seconde face (82) opposée à la première face (81) et depuis laquelle s'étend le capot (9) en saillie dans la direction radiale (D_{R}), le boîtier (10) comprenant un logement (11) défini par l'espace intérieur s'étendant entre la seconde face (82) de la plateforme (8) et le capot (9) et dans lequel sont disposées lesdites cavités résonnantes (14).

2. Anneau (1) selon la revendication 1, dans lequel la plateforme (8) des panneaux (5) de traitement acoustique comprend des orifices traversant (12) permettant à la veine d'écoulement (20) de communiquer avec les cavités résonnantes (14) du panneau (5) de traitement acoustique.

3. Anneau selon la revendication 2, dans lequel la plateforme (8) des panneaux (5) de traitement acoustique présente un taux de perforation compris entre 5 à 12% de la surface couverte par la plateforme (8).

4. Anneau (1) selon l'une des revendications 1 à 3, dans lequel la plateforme (8) des panneaux (5) de traitement acoustique s'étend sur une portion annulaire supérieure à la portion annulaire décrite par le capot (9), le boîtier (10) formé par l'assemblage du capot (9) avec la plateforme (8) définissant sur sa périphérie extérieure une portée (83) permettant de recevoir un joint d'étanchéité.

5. Anneau (1) selon l'une des revendications 1 à 4, dans lequel les panneaux (5) de traitement acoustique comprennent chacun au moins un amortisseur élastique (18) monté sur la seconde face (82) de la plateforme (8).

6. Anneau (1) selon l'une des revendications 1 à 5, dans lequel, pour chaque panneau (5) de traitement acoustique, le capot (9) comprend une couche acoustiquement réfléchissante.

7. Anneau (1) selon l'une des revendications 1 à 6, dans lequel le boîtier (10) comprend des cloisons (13) disposées dans le logement (11) et s'étendant dans la direction radiale (D_{R}) entre la face externe (82) de la plateforme (8) et le capot (9).

8. Anneau (1) selon la revendication 7, dans lequel les cloisons (13) sont conformées pour former des cavités radialement courbes.

9. Anneau (1) selon l'une des revendications 1 à 8, dans lequel chaque panneau (5) de traitement comprend un matériau poreux disposé dans le logement (11) du boîtier (10) et définissant lesdites cavités résonnantes (14).

10. Anneau (1) selon l'une des revendications 1 à 8, dans lequel chaque panneau (5) de traitement acoustique comprend une structure en nid d'abeille montée dans le logement (11) du boîtier (10) et formant des alvéoles définissant lesdites cavités résonnantes (14).

11. Anneau (1) selon l'une des revendications 1 à 10, dans lequel la plateforme (8) et le capot (9) de chaque panneau (5) de traitement acoustique sont en matériau composite de carbone ou en matériau composite de verre.

12. Anneau (1) selon l'une des revendications 1 à 11, dans lequel chaque panneau (5) de traitement acoustique comprend des orifices (15) de fixation radiale du panneau (5) à la première ou seconde gaine annulaire (2, 3), chaque orifice (15) de fixation radiale traversant le boîtier (10) selon la direction radiale (D_{R}) depuis la plateforme (8) jusqu'au capot (9), le boîtier (10) comprenant en outre une zone renforcée (17) dépourvue de cavité résonnantes (14) autour de chaque orifice (15) de fixation radiale.

13. Turbomachine comprenant un anneau (1) d'aubes fixes selon l'une quelconque des revendications 1 à 12.

14. Aéronef comprenant une turbomachine selon la revendication 13.

## Patentansprüche

1. Leitschaufelring (1) einer Turbomaschine eines Luftfahrzeugs, wobei der Ring (1) eine axiale Richtung (D_{A}) und eine radiale Richtung (D_{R}) aufweist und einen ersten ringförmigen Mantel (2), der eine erste Innenfläche (2a) aufweist, und einen zweiten ringförmigen Mantel (3), der eine zweite Innenfläche (3a), die der ersten Innenfläche (2a) des ersten ringförmigen Mantels (2) gegenüberliegt, umfasst, wobei der erste und der zweite Mantel (2, 3) koaxial sind und zwischen sich einen Strömungskanal (20) für einen Gasstrom (F) definieren, und wobei der Ring (1) ferner teilweise ringförmige Schalldämmungsplatten (5) mit Resonanzräumen (14) umfasst und wobei Schaufeln (4) sich in der radialen Richtung (D_{R}) zwischen dem ersten Mantel (2) und dem zweiten Mantel (3) erstrecken,
**dadurch gekennzeichnet, dass**:
- einerseits die Schaufeln (4) jeweils ein radiales Blatt (45) und wenigstens zwei Einhaklaschen (6) an jedem radialen Ende (40) des Blattes (45) aufweisen, die an dem ersten oder dem zweiten Mantel (2, 3) befestigt sind, und
- andererseits die Innenfläche (2a, 3a) von wenigstens einem der ersten und zweiten ringförmigen Mäntel (2, 3) und die entsprechenden Einhaklaschen (6) durch Schalldämmungsplatten (5), welche zwischen den Blättern (45) angeordnet sind, bedeckt sind, und
- die Schalldämmungsplatten (5) jeweils eine teilweise ringförmige Plattform (8) und eine Haube (9) umfassen, welche mit der Plattform (8) ein geschlossenes Gehäuse (10) bildet, wobei die Plattform (8) eine erste Seite (81) gegenüber dem Strömungskanal (20) und eine zweite Seite (82) aufweist, die der ersten Seite (81) gegenüberliegt und von der aus sich die Haube (9) in radialer Richtung (D_{R}) vorspringend erstreckt, wobei das Gehäuse (10) eine Aufnahme (11) umfasst, die durch den Innenraum definiert ist, der sich zwischen der zweiten Seite (82) der Plattform (8) und der Haube (9) erstreckt und in dem die Resonanzräume (14) angeordnet sind.

2. Ring (1) nach Anspruch 1, bei dem die Plattform (8) der Schalldämmungsplatten (5) Durchgangsöffnungen (12) aufweist, die dem Strömungskanal (20) ermöglichen, mit den Resonanzräumen (14) der Schalldämmungsplatte (5) zusammenzuwirken.

3. Ring nach Anspruch 2, bei dem die Plattform (8) der Schalldämmungsplatten (5) einen Perforationsgrad im Bereich zwischen 5 und 12 % der durch die Plattform (8) bedeckten Fläche aufweist.

4. Ring (1) nach einem der Ansprüche 1 bis 3, bei dem die Plattform (8) der Schalldämmungsplatten (5) sich über einen Ringabschnitt erstreckt, der größer ist als der durch die Haube (9) beschriebene Ringabschnitt, wobei das Gehäuse (10), das durch Zusammenbau der Haube (9) mit der Plattform (8) gebildet wird, an seinem Außenumfang eine Auflagefläche (83) definiert, die die Aufnahme einer Dichtung ermöglicht.

5. Ring (1) nach einem der Ansprüche 1 bis 4, bei dem die Schalldämmungsplatten (5) jeweils wenigstens einen elastischen Dämpfer (18) aufweisen, der an der zweiten Seite (82) der Plattform (8) angebracht ist.

6. Ring (1) nach einem der Ansprüche 1 bis 5, bei dem die Haube (9) für jede Schalldämmungsplatte eine akustisch reflektierende Schicht aufweist.

7. Ring (1) nach einem der Ansprüche 1 bis 6, bei dem das Gehäuse (10) Trennwände (13) aufweist, die in der Aufnahme (11) angeordnet sind und sich in der radialen Richtung (D_{R}) zwischen der Außenseite (82) der Plattform (8) und der Haube (9) erstrecken.

8. Ring (1) nach Anspruch 7, bei dem die Trennwände (13) so gestaltet sind, dass sie radial gekrümmte Hohlräume bilden.

9. Ring (1) nach einem der Ansprüche 1 bis 8, bei dem jede Dämmplatte (5) ein poröses Material umfasst, das in der Aufnahme (11) des Gehäuses (10) angeordnet ist und die Resonanzräume (14) definiert.

10. Ring (1) nach einem der Ansprüche 1 bis 8, bei dem jede Schalldämmungsplatte (5) eine Wabenstruktur aufweist, die in der Aufnahme (11) des Gehäuses (10) angebracht ist und Zellen bildet, welche die Resonanzräume (14) definieren.

11. Ring (1) nach einem der Ansprüche 1 bis 10, bei dem die Plattform (8) und die Haube (9) einer jeden Schalldämmungsplatte (5) aus Kohlenstoffverbundwerkstoff oder aus Glasverbundwerkstoff bestehen.

12. Ring (1) nach einem der Ansprüche 1 bis 11, bei dem jede Schalldämmungsplatte (5) Öffnungen (15) zur radialen Befestigung der Platte (5) an dem ersten oder dem zweiten ringförmigen Mantel (2, 3) umfasst, wobei jede radiale Befestigungsöffnung (15) das Gehäuse (10) in der radialen Richtung (D_{R}) von der Plattform (8) bis zur Haube (9) durchquert, wobei das Gehäuse (10) ferner einen verstärkten Bereich (17) ohne Resonanzräume (14) um jede radiale Befestigungsöffnung (15) herum umfasst.

13. Turbomaschine, die einen Leitschaufelring (1) nach einem der Ansprüche 1 bis 12 umfasst.

14. Luftfahrzeug, das eine Turbomaschine nach Anspruch 13 umfasst.

## Claims

1. A ring (1) of vanes for an aircraft turbine engine, the ring (1) presenting an axial direction (D_{A}) and a radial direction (D_{R}) and comprising a first annular sheath (2) presenting a first inside surface (2a) and a second annular sheath (3) presenting a second inside surface (3a) facing the first inside surface (2a) of the first annular sheath (2), the first and second sheaths (2, 3) being coaxial and defining between them a flow passage (20) for a gas stream (F), and the ring (1) further comprising both partially annular acoustic treatment panels (5) including resonant cavities (14) and also vanes (4) extending in the radial direction (D_{R}) between the first sheath (2) and the second sheath (3); the ring being **characterized in that**
• firstly, each vane (4) includes a radial airfoil (45) with at least two attachment tabs (6) at each radial end (40) of the airfoil (45) fastened to the first or second sheath (2, 3); and
• secondly, the inside surface (2a, 3a) of at least one of the first and second annular sheaths (2, 3) and the corresponding attachment tabs (6) are covered by acoustic treatment panels (5) arranged between the airfoils (45); and
• each acoustic treatment panel (5) comprises a partially annular platform (8) and a cover (9) cooperating with the platform (8) to form a closed box (10), the platform (8) presenting a first face (81) facing the flow passage (20) and a second face (82) opposite from the first face (81) and from which the cover (9) extends projecting in the radial direction (D_{R}), the box (10) including a housing (11) defined by the inside space extending between the second face (82) of the platform (8) and the cover (9), and having said resonant cavities (14) arranged therein.

2. A ring (1) according to claim 1, wherein the platform (8) of each acoustic treatment panel (5) includes through orifices (12) enabling the flow passages (20) to communicate with the resonant cavities (14) in the acoustic treatment panel (5).

3. A ring according to claim 2, wherein the platform (8) of each acoustic treatment panel (5) presents a perforation fraction lying in the range 5% to 12% of the area covered by the platform (8).

4. A ring (1) according to any one of claims 1 to 3, wherein the platform (8) of each acoustic treatment panel (5) extends over an annular portion greater than the annular portion described by the cover (9), the box (10) formed by assembling the cover (9) with the platform (8) defining a bearing surface (83) on its outer periphery for receiving a sealing gasket.

5. A ring (1) according to any one of claims 1 to 4, wherein each acoustic treatment panel (5) includes at least one resilient damper (18) mounted on the second face (82) of the platform (8).

6. A ring (1) according to any one of claims 1 to 5, wherein the cover (9) of each acoustic treatment panel (5) includes an acoustically reflective layer.

7. A ring (1) according to any one of claims 1 to 6, wherein the box (10) includes partitions (13) arranged in the housing (11) and extending in the radial direction (D_{R}) between the outside face (82) of the platform (8) and the cover (9).

8. A ring (1) according to claim 7, wherein the partitions (13) are shaped to form cavities that are radially curved.

9. A ring (1) according to any one of claims 1 to 8, wherein each acoustic treatment panel (5) comprises a porous material arranged in the housing (11) of the box (10) and defining said resonant cavities (14).

10. A ring (1) according to any one of claims 1 to 8, wherein each acoustic treatment panel (5) comprises a honeycomb structure mounted in the housing (11) of the box (10) and forming cells defining said resonant cavities (14).

11. A ring (1) according to any one of claims 1 to 10, wherein the platform (8) and the cover (9) of each acoustic treatment panel (5) are made of carbon composite material or of glass composite material.

12. A ring (1) according to any one of claims 1 to 11, wherein each acoustic treatment panel (5) includes radial fastener orifices (15) for fastening the panel (5) to the first or second annular sheath (2, 3), each radial fastener orifice (15) passing through the box (10) in the radial direction (D_{R}) from the platform (8) to the cover (9), the box (10) further including a setback zone (17) without any resonant cavities (14) around each radial fastener orifice (15).

13. A turbine engine including a ring (1) of vanes according to any one of claims 1 to 12.

14. An aircraft including a turbine engine according to claim 13.
